# EUROPÄISCHE PATENTSCHRIFT

(11) **EP 1 509 430 B1**
(45) Veröffentlichungstag und Bekanntmachung des Hinweises auf die Patenterteilung: **21.06.2006**
(21) Anmeldenummer: 03730137.1
(22) Anmeldetag: 30.05.2003
(51) Int. Cl.: B60S 1/08

(54) **OPTOELEKTRONISCHE SENSOREINRICHTUNG**
OPTOELECTRONIC SENSOR DEVICE
DISPOSITIF DE DETECTION OPTO-ELECTRONIQUE

(30) Priorität: 04.06.2002 DE 10224692
(43) Veröffentlichungstag der Anmeldung: 02.03.2005
(73) Patentinhaber: Leopold Kostal GmbH & Co. KG, 58507 Lüdenscheid (DE)
(72) Erfinder: HAGEN, Frank, 58511 Lüdenscheid (DE); WEBER, Thomas, 58513 Lüdenscheid (DE); LEVERS, Jürgen, 44388 Dortmund (DE)
(86) Internationale Anmeldenummer: PCT/EP2003/005667
(87) Internationale Veröffentlichungsnummer: WO 2003/101795

(56) Entgegenhaltungen:
- DE-C- 4 202 121
- US-A- 5 804 817
- PATENT ABSTRACTS OF JAPAN vol. 2002, no. 03, 3. April 2002 (2002-04-03) & JP 2001 324443 A (YAZAKI CORP), 22. November 2001 (2001-11-22)

## Beschreibung

Die vorliegende Erfindung betrifft eine optoelektronische Sensoreinrichtung zur Erfassung des Benetzungsgrades einer transparenten Scheibe mit Niederschlag, mit einem an die Scheibe angekoppelten Strahlenleitkörper, dem auf einer Hauptleiterplatte angeordnete Strahlensender und Strahlenempfänger sowie in einem außerhalb der Strahlenwege liegenden Bereich eine Heizeinrichtung zugeordnet sind, wobei die Heizeinrichtung auf einem zusätzlichen, parallel zur Scheibenfläche angeordneten und mit der Hauptleiterplatte elektrisch verbundenen, plattenförmigen Element angeordnet ist.

Derartige Einrichtungen sind insbesondere dazu vorgesehen, in Abhängigkeit der auf der Windschutzscheibe des Kraftfahrzeuges befindlichen Niederschlagsmenge ein zugeordnetes Scheibenwischsystem zu beeinflussen.

Durch die DE 42 02 121 C1 ist eine Sensoreinrichtung bekannt geworden, bei der an einem Strahlenleitkörper zwei Linsenpaare angeordnet sind, wobei die jeweils eine Linse der Linsenspaare einem Strahlensender und die andere einem Strahlenempfänger zugeordnet ist. Die Linsen dienen zur Parallelisierung des von den Strahlensendern ausgesandten, divergenten Strahlenbündel bzw. zur Fokussierung der an der äußeren Oberfläche der Scheibe reflektierten, parallelen Strahlenbündel auf die Strahlenempfänger. Die Heizeinrichtung ist an dem der Scheibe abgewandten Seite des Strahlenleitkörpers angeordnet, und besteht aus einem PTC-Widerstand oder einer Heizfolie.

Diese Art von Heizeinrichtungen erfordert aber zum einen den Einsatz relativ aufwendiger und kostspieliger Spezialbauelemente und bewirkt zum anderen, daß - insbesondere bei einer besonders effektiven Ausführung, bei der sich die Heizeinrichtung als ebenes Gebilde parallel zur Scheibe erstreckt - in einem relativ großen Bereich das Eindringen von Umgebungslicht in das Innere der Sensoreinrichtung verhindert ist. Obwohl dies im allgemeinen sogar erwünscht ist, ergibt sich hieraus dennoch ein Nachteil, falls etwa die Anordnung von Sensoren z.B. für Umgebungslicht in der gleichen Einrichtung gewünscht ist. In diesem Falle muß dazu ein Bereich innerhalb der Sensoreinrichtung vorgesehen werden, der sich außerhalb des von der Heizeinrichtung abgeschatteten Bereichs befindet. Dadurch vergrößert sich jedoch die gesamte Ausdehnung der Einrichtung, was im allgemeinen als nachteilig anzusehen ist.

Durch die US 5,804,817 ist eine Sensoreinrichtung gemäß dem Oberbegriff des Hauptanspruchs bekannt geworden, bei der die Heizeinrichtung durch ein mit der Hauptleiterplatte elektrisch verbundenes Heizelement auf einer parallel zur Scheibenfläche angeordneten Heizplatte gebildet ist.

Die optoelektronische Sensoreinrichtung nach der vorliegenden Erfindung hat gegenüber dem vorbekannten Stand der Technik den Vorteil, daß die Heizeinrichtung deutlich kostengünstiger herzustellen ist, und daß darüberhinaus insbesondere der in unmittelbarer Scheibennähe befindliche Bauraum für zusätzliche Lichtsensoren nutzbar ist.

Dies ist dadurch ermöglicht, daß das plattenförmige Element als Schaltungssubstrat ausgebildet ist, auf dessen der Scheibe zugewandter Seite ein zusätzlicher Strahlungsempfänger angeordnet ist.

Eine besonders einfache und effektive Heizeinrichtung wird durch eine auf dem Schaltungssubstrat - insbesondere auf dessen der Scheibe abgewandter Seite - aufgebrachtes Widerstandselement gebildet.

Als Schaltungssubstrat bietet sich wegen der Temperaturbeständigkeit und der guten Bedruckbarkeit insbesondere in Standard Siebdruck-Verfahren ein plattenförmiges Keramik-Substrat an, es kann aber auch eine herkömmliche starre oder flexible Leiterplatte eingesetzt werden.

Weitere vorteilhafte Ausgestaltungen des erfindungsgemäßen Gegenstandes sind in den weiteren Unteransprüchen angegeben und werden anhand des in der Zeichnung dargestellten Ausführungsbeispiels näher erläutert.

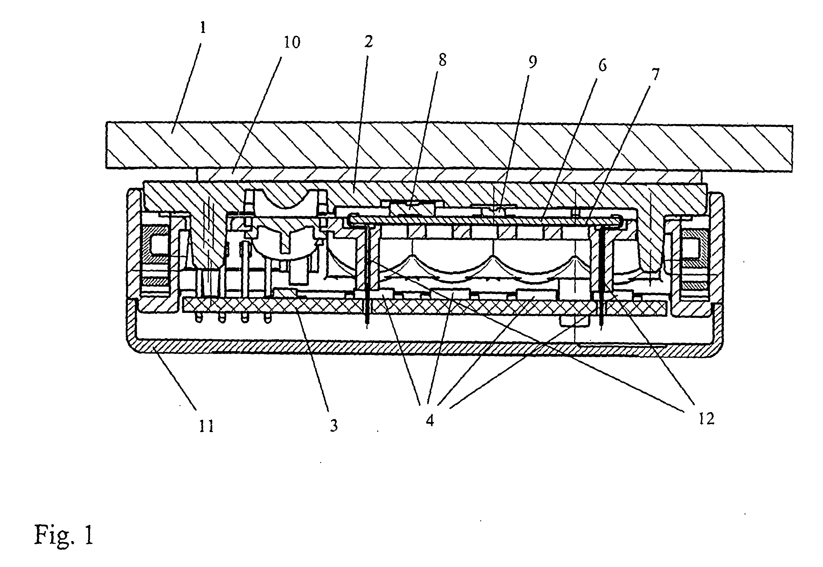

Dabei zeigt
- **Fig. 1**: eine erfindungsgemäße Sensoreinrichtung in einer senkrecht zur Scheibenfläche geschnittenen Darstellung

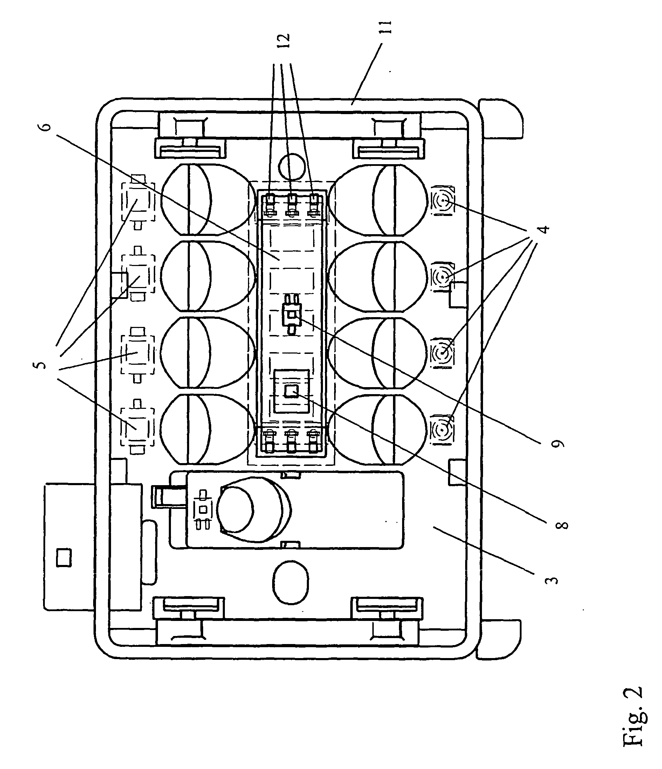

- **Fig. 2**: die Sensoreinrichtung aus Fig.1 in einer Schnittebene parallel zur Scheibenfläche

Wie aus der Zeichnung hervorgeht, besteht eine zur Erfassung des Benetzungsgrades einer transparenten Scheibe 1 mit Niederschlag vorgesehene, optoelektronische Sensoreinrichtung im wesentlichen aus einem einerseits Strahlensendern 4 und andererseits Strahlenempfängern 5 zugeordneten und mit zur Parallelisierung der von den Strahlensendern 4 ausgesandten, divergenten Strahlenbündeln bzw. zur Fokussierung der an der äußeren Oberfläche der Scheibe 1 reflektierten, parallelen Strahlenbündel auf die Strahlenempfänger 5 vorgesehenen Linsen versehenen Strahlenleitkörper 2, der mittels eines optischen Klebers 10 auf der nicht dem Niederschlag ausgesetzten, inneren Oberfläche der Scheibe 1 befestigt ist. Bei der Scheibe 1 handelt es sich insbesondere um die Windschutzscheibe oder Heckscheibe eines Kraftfahrzeuges, an der die in einem Gehäuse 11 angeordnete Sensoreinrichtung an exponierter, d.h. die Sicht nicht beeinträchtigender, jedoch für die Erfassung des Niederschlages prädestinierter Stelle der inneren Oberfläche vorhanden ist. Die Strahlensender 4 und die Strahlenempfänger 5 sind dabei als SMD-Bauteile auf einer Hauptleiterplatte 3 angeordnet, die ihrerseits bezüglich des Strahlenleitkörpers 2 über entsprechende Bohrungen in der Leiterplatte 3 und damit kooperierende Dome am Strahlenleitkörper 2 positioniert wird.

Um einerseits ggf. störende Betauung auf der Scheibenaußenseite zu - entfernen und andererseits die gesamte Sensoreinrichtung auf eine definierte Betriebstemperatur zu bringen, ist in der Nähe der Scheibe 1 eine Heizvorrichtung vorgesehen. Bei dieser Heizvorrichtung handelt es sich um ein auf einem beispielsweise als starre Leiterplatte oder als plattenförmiges Keramik-Substrat ausgeführten Schaltungssubstrat 6 aufgebrachtes Widerstandselement 7. Das Widerstandselement 7 ist dabei als auf der der Scheibe 1 abgewandten Seite des Substrats 6 aufgedruckte Dickschichtstruktur realisiert. Möglich ist aber auch die Verwendung von SMD-Widerständen - insbesondere solchen kleiner Bauform - oder eines abgeglichenen und sich somit selbst regelnden PTC-Systems. Das Schaltungssubstrat 6 ist über Anschlußstifte 12 mit der Hauptleiterplatte 3 elektrisch verbunden, so daß darüber z.B. eine Beaufschlagung des Widerstandselements 7 mit einem Heizstrom ermöglicht ist. Da das Widerstandselement 7 ohne Nachteile auf der der Scheibe 1 abgewandten Seite des Schaltungssubstrats 6 angeordnet werden kann, ist dessen der Scheibe 1 zugewandte Oberfläche für die Anbringung weiterer Bauteile nutzbar. Im vorliegenden Fall sind zwei verschiedenen Strahlungssensoren 8, 9 auf dem Substrat 6 angebracht und über auf diesem vorhandene Leiterbahnen mit den Anschlußstiften 12 und somit mit der Hauptleiterplatte 3 verbunden. Bei den Strahlungssensoren 8, 9 handelt es sich um Bauteile, welche zur Empfindlichkeitssteuerung der Sensoreinrichtung selbst oder z.B. auch zur Beeinflussung anderer Einrichtungen des Fahrzeugs wie etwa der Beleuchtungseinrichtungen oder einer Klimaanlage vorgesehen sein können. Für derartige Zwecke kommen insbesondere solche Sensoren zum Einsatz, welche durch spezifische Eigenschaften etwa hinsichtlich ihres räumlichen Erfassungswinkels oder ihrer spektralen Empfindlichkeit charakterisiert sind. Der Einbauort ist für diese Sensoren gleich in mehrfacher Hinsicht vorteilhaft, da sie sich dort nicht nur in unmittelbarer Nähe zur Scheibe 1 befinden, der Lichteinfall also optimal ist, sondern auch in einem Bereich sind, in dem bei allen Witterungsbedingungen eine bestmögliche-Sauberhaltung der Scheibe 1 gewährleistet ist. Darüberhinaus können auf dem Substrat 6 z.B. auch zur Temperaturmessung geeignete Bauelemente angebracht sein, welche etwa zur Regelung der Heizeinrichtung vorgesehen sein können. Eine solche Temperaturmessung bzw. -regelung durch direkt auf dem Substrat angeordnete Bauelemente ist beispielsweise zur Kompensation der Temperaturabhängigkeit der Strahlungssensoren optimal geeignet. Auf dem Substrat aufgedruckte, laserabgleichbare Dickschicht-Widerstände ermöglichen in prozeßtechnisch günstiger Weise beispielsweise eine ggf. erforderliche Einstellung von Arbeitspunkten der genannten licht- oder temperaturempfindlichen Bauteile.

## Patentansprüche

1. Optoelektronische Sensoreinrichtung zur Erfassung des Benetzungsgrades einer transparenten Scheibe (1) mit Niederschlag, mit einem an die Scheibe (1) angekoppelten Strahlenleitkörper (2), dem auf einer Hauptleiterplatte (3) angeordnete Strahlensender (4) und Strahlenempfänger (5) sowie in einem außerhalb der Strahlenwege liegenden Bereich eine Heizeinrichtung zugeordnet sind, wobei die Heizeinrichtung auf einem zusätzlichen, parallel zur Scheibenfläche angeordneten und mit der Hauptleiterplatte (3) elektrisch verbundenen plattenförmigen Element angeordnet ist, **dadurch gekennzeichnet, daß** das plattenf6rmige Element äls Schältungssubstrat (6) ausgebildet ist, auf dessen der Scheibe (1) zugewandter Seite ein zusätzlicher Strahlungsempfänger (8, 9) angeordnet ist.

2. Optoelektronische Sensoreinrichtung nach Anspruch 1, **dadurch gekennzeichnet, daß** die Heizeinrichtung durch ein auf dem Schaltungssubstrat (6) aufgebrachtes, abgeglichenes und sich selbst regelndes PTC-System gebildet ist.

3. Optoelektronische Sensoreinrichtung nach Anspruch 1, **dadurch gekennzeichnet, daß** die Heizeinrichtung durch ein auf dem Schaltungssubstrat (6) aufgebrachtes Widerstandselement (7) gebildet ist.

4. Optoelektronische Sensoreinrichtung nach Anspruch 3, **dadurch gekennzeichnet, daß** das Widerstandselement (7) auf der der Scheibe (1) abgewandten Seite des Schaltungssubstrats (6) als Dickschichtstruktur aufgedruckt ist.

5. Optoelektronische Sensoreinrichtung nach Anspruch 3, **dadurch gekennzeichnet, daß** das Widerstandselement (7) durch SMD-Widerstände kleiner Bauform gebildet ist.

6. Optoelektronische Sensoreinrichtung nach einem der Ansprüche 1 bis 5, **dadurch gekennzeichnet, daß** das Schaltungssubstrat (6) eine starre und/oder flexible Leiterplatte oder ein Keramik-Substrat ist.

7. Optoelektronische Sensoreinrichtung nach einem der Ansprüche 1 bis 6, **dadurch gekennzeichnet, daß** auf dem Schaltungssubstrat (6) zumindest ein weiteres elektrisches Bauelement angeordnet ist.

8. Optoelektronische Sensoreinrichtung nach Anspruch 7, **dadurch gekennzeichnet, daß** als weiteres elektrisches Bauelement ein zur Temperaturmessung geeignetes vorhanden ist.

9. Optoelektronische Sensoreinrichtung nach Anspruch 8, **dadurch gekennzeichnet, daß** als Bauelement zur Temperaturmessung eine auf dem Substrat (6) aufgedruckte Struktur vorgesehen ist.

10. Optoelektronische Sensoreinrichtung nach einem der Ansprüche 1 bis 9, **dadurch gekennzeichnet, daß** dem Strahlungsempfänger (8, 9) ein auf dem Schaltungssubstrat (6) aufgedruckter, laserabgleichbarer Widerstand zugeordnet ist.

## Claims

1. Optoelectronic sensor facility for detecting the degree of wetting of a transparent screen (1) with rain, with a beam guiding component (2) coupled to the screen (1) to which are assigned beam transmitters (4) and beam receivers (5) arranged on a main printed circuit board (3) as well as a heating device positioned in a zone outside the beam paths, with the heating device being configured on a supplementary board-like element which is arranged parallel to the surface of the screen and electrically connected to the main printed circuit board (3), **characterised by** the fact that the board-like element is configured as a circuit substrate (6) which features an additional radiation receiver (8, 9) on its side facing the screen (1).

2. Optoelectronic sensor facility in accordance with Claim 1, **characterised by** the fact that the heating device is made up of a balanced and self-regulating PTC system which is mounted on the circuit substrate (6).

3. Optoelectronic sensor facility in accordance with Claim 1, **characterised by** the fact that the heating device is made up of a resistor element (7) mounted on the circuit substrate (6).

4. Optoelectronic sensor facility in accordance with Claim 3, **characterised by** the fact that the resistor element (7) is printed as a thick-film structure on the side of the circuit substrate (6) facing away from the screen (1).

5. Optoelectronic sensor facility in accordance with Claim 3, **characterised by** the fact that the resistor element (7) is made up of SMD resistors of a small design.

6. Optoelectronic sensor facility in accordance with any of Claims 1 to 5, **characterised by** the fact that the circuit substrate (6) is a rigid and/or flexible printed circuit board or a ceramic substrate.

7. Optoelectronic sensor facility in accordance with any of Claims 1 to 6, **characterised by** the fact that at least one further electrical component is arranged on the circuit substrate (6).

8. Optoelectronic sensor facility in accordance with Claim 7, **characterised by** the fact that an electrical component suitable for measuring temperatures is provided as a further component.

9. Optoelectronic sensor facility in accordance with Claim 8, **characterised by** the fact that a structure printed onto the substrate (6) is provided as a component for measuring the temperature.

10. Optoelectronic sensor facility in accordance with any of Claims 1 to 9, **characterised by** the fact that a laser-adjustable resistor printed on the circuit substrate (6) is assigned to the radiation receiver (8, 9).

## Revendications

1. Dispositif de détection optoélectronique pour la détection du degré d'humification d'une vitre transparente (1) par une précipitation, avec un guide de rayonnement (2) couplé à la vitre (1), auquel sont associés des émetteurs de rayonnement (4) et des récepteurs de rayonnement (5), agencés sur une carte-mère (3), ainsi qu'un dispositif de chauffage, placé dans une région située en dehors des trajets du rayonnement, ledit dispositif de chauffage étant installé sur un élément supplémentaire, en forme de plaque, orienté parallèlement à la surface de la vitre et relié électriquement à la carte-mère (3), **caractérisé en ce que** l'élément en forme de plaque est conçu en tant que substrat de circuit (6) dont le côté orienté vers la vitre (1) est pourvu d'un récepteur de rayonnement (8, 9) supplémentaire.

2. Dispositif de détection optoélectronique selon la revendication 1, **caractérisé en ce que** le dispositif de chauffage est constitué par un système CPT équilibré et autorégulé, agencé sur le substrat de circuit (6).

3. Dispositif de détection optoélectronique selon la revendication 1, **caractérisé en ce que** le dispositif de chauffage est constitué par un élément résistif (7) agencé sur le substrat de circuit (6).

4. Dispositif de détection optoélectronique selon la revendication 3, **caractérisé en ce que** l'élément résistif (7) est imprimé, en tant que structure en couche épaisse, sur la face du substrat de circuit (6) opposée à la vitre (1).

5. Dispositif de détection optoélectronique selon la revendication 3, **caractérisé en ce que** l'élément résistif (7) est formé par des résistances SMD de petites dimensions.

6. Dispositif de détection optoélectronique selon l'une des revendications 1 à 5, **caractérisé en ce que** le substrat de circuit (6).est une plaquette de circuit rigide et / ou flexible ou un substrat en céramique.

7. Dispositif de détection optoélectronique selon l'une des revendications 1 à 6, **caractérisé en ce que**, sur le substrat de circuit (6) est disposé au moins un autre élément électrique.

8. Dispositif de détection optoélectronique selon la revendication 7, **caractérisé en ce que**, comme autre élément électrique, est prévu un élément approprié à la mesure de la température.

9. Dispositif de détection optoélectronique selon la revendication 8, **caractérisé en ce que**, comme élément de mesure de la température, est prévue une structure imprimée sur le substrat (6).

10. Dispositif de détection optoélectronique selon l'une des revendications 1 à 9, **caractérisé en ce que**, au récepteur de rayonnement (8, 9), est associée une résistance imprimée sur le substrat de circuit (6), laquelle peut être équilibrée au laser.
